# FASCICULE DE BREVET EUROPEEN

(11) **EP 0 895 504 B1**
(45) Date de publication et mention de la délivrance du brevet: **29.09.1999**
(21) Numéro de dépôt: 97921887.2
(22) Date de dépôt: 25.04.1997
(51) Int. Cl.: B64B 1/58

(54) **BALLON STRATOSPHERIQUE A DUREE DE VOL ELEVEE**
STRATOSPHARENBALLON MIT LANGER FLUGZEIT
STRATOSPHERIC BALLOON WITH LONG FLIGHT DURATION

(30) Priorité: 25.04.1996 FR 9605391
(43) Date de publication de la demande: 10.02.1999
(73) Titulaire: CENTRE NATIONAL D'ETUDES SPATIALES, F-75039 Paris Cedex 01 (FR)
(72) Inventeur: TOCKERT, Christian, F-31000 Toulouse (FR)
(74) Mandataire: Cabinet BARRE LAFORGUE & associés
(86) Numéro de dépôt international: FR9700745
(87) Numéro de publication internationale: WO9739944

(56) Documents cités:
- EP-A- 0 321 012
- EP-A- 0 524 872
- US-A- 3 565 368
- US-A- 4 865 266

## Description

L'invention concerne un ballon stratosphérique à durée de vol élevée, du type ayant une enveloppe en un matériau transparent apte à présenter un état de plénitude où ladite enveloppe est entièrement gonflée. Par "matériau transparent", on entend selon l'habitude un matériau qui laisse passer le rayonnement solaire et infrarouge avec une absorption très minoritaire par rapport aux flux incidents ; ce matériau peut en particulier être constitué par du polyéthylène ou du polyester, qui sont les matériaux généralement utilisés pour fabriquer les ballons stratosphériques.

On sait que les ballons stratosphériques classiques à volume variable peuvent présenter des volumes très importants (supérieurs à 10⁶ m³) et transporter de lourdes charges jusqu'à des altitudes de l'ordre de 40 à 45 km. Ces ballons stratosphériques se caractérisent notamment en ce qu'ils fonctionnent avec un gaz plus léger que l'air dont ils tirent leur force ascensionnelle et en ce que leur volume à l'état de plénitude est très supérieur à leur volume à l'état de bulle : ce type de ballon peut par exemple être illustré par le brevet US 3.312.427. Ces ballons stratosphériques se différencient totalement des montgolfières qui sont des ballons à volume constant, utilisant le gaz de l'atmosphère dans laquelle ils sont plongés et tirant leur force ascensionnelle, soit d'un brûleur, soit du rayonnement ambiant (solaire ou infrarouge). Les montgolfières solaires ou infrarouges sont réalisées de façon à capter en permanence le maximum d'énergie solaire ou infrarouge et, à cet effet, sont munies sur au moins la moitié de leur surface d'un dispositif de piégeage du rayonnement solaire ou infrarouge ; les ballons montgolfières peuvent par exemple être illustrés par les brevets FR 2.418.150 ou US 4.262.864.

Le problème essentiel que posent les ballons stratosphériques à volume variable réside dans leur très courte durée de vie, de l'ordre de 24 heures qui peut être étendue à quelques jours à condition d'emporter d'importantes quantités de lest. En effet, en période diurne, lorsqu'un ballon stratosphérique parvient à l'état de plénitude, une partie des gaz est expulsée jusqu'à ce que la force ascensionnelle libre s'annule, le ballon se stabilisant alors à son plafond de vol ; de nuit, les gaz du ballon subissent un refroidissement important qui entraîne une diminution considérable du volume de celui-ci et une mise en descente irréversible ; seul un largage de lest permet alors une stabilisation (de l'ordre de 10 % du poids de l'ensemble) ; toutefois, la force ascensionnelle qui est ainsi rajoutée se retrouve le jour suivant et se traduit par une nouvelle expulsion de gaz au plafond, de sorte que l'opération de largage de lest est à renouveler chaque nuit pour éviter la descente irréversible. Les quantités de lest emportées étant limitées, la durée de vie de tels ballons ne peut généralement pas dépasser 4 à 5 jours. Cette limitation de durée de vie est un défaut grave de ce type de ballon, cependant que l'obligation d'emporter du lest en quantité importante est très pénalisante puisqu'elle oblige, pour une charge utile donnée, à augmenter le volume du ballon et la masse de gaz aérostatique et, en conséquence, conduit à un accroissement du coût du vol.

Pour pallier cet inconvénient, il a été conçu, tel que décrit dans le brevet FR 2.639.607, un ballon stratosphérique à volume variable comportant une cape de piégeage thermique fixée sur la partie supérieure de l'enveloppe. Tel qu'explicité dans ce brevet, une telle cape de piégeage permet, en effet, d'assurer une stabilisation du ballon entre des niveaux supérieurs (périodes diurnes) et des niveaux inférieurs (périodes nocturnes) pendant une pluralité de cycles diurnes et nocturnes. Toutefois, comme tous les ballons stratosphériques classiques, un tel ballon est confronté à des problèmes de diffusion du gaz aérostatique, qui conduisent à une limitation de sa durée de vol.

La présente invention vise à pallier les inconvénients sus-évoqués des ballons stratosphériques actuels et a pour objectif essentiel de fournir un ballon stratosphérique présentant une durée de vol élevée sans nécessiter de largage de lest.

Un autre objectif de l'invention est de fournir un ballon stratosphérique apte à emporter de fortes charges utiles, et dont le coût diffère peu d'un ballon stratosphérique ouvert classique.

A cet effet, l'invention vise un ballon stratosphérique comprenant :
- une enveloppe extérieure souple de forme naturelle, c'est-à-dire à isocontrainte, réalisée en matière synthétique transparente et présentant une ouverture d'entrée d'air apte à permettre de maintenir le ballon à volume constant,
- un écran interne réalisé en un matériau captateur d'énergie visible et infrarouge, et présentant la forme d'une surface engendrée par une génératrice mobile parallèle à l'axe de symétrie longitudinal de l'enveloppe extérieure, ledit écran interne étant relié à l'enveloppe par des moyens d'attache disposés en partie haute de ladite enveloppe à distance de l'axe longitudinal de cette dernière, de façon à s'étendre longitudinalement librement à l'intérieur de l'enveloppe sans contact avec celle-ci.

L'invention a donc consisté à réaliser un ballon stratosphérique qui intègre en premier lieu un écran intérieur constituant un corps chauffant faisant office de récupérateur d'énergie solaire et infrarouge, qui assure, de part et d'autre dudit écran, une double convection à l'intérieur de l'enveloppe, et dont la température élevée conduit à un réchauffement important du gaz aérostatique qui se traduit par une amélioration notable de la portance du ballon par rapport à celle des ballons stratosphériques classiques. De plus, de par la forme et la disposition à l'intérieur de l'enveloppe de cet écran interne, on obtient, en période nocturne, une répartition identique des facteurs de vue entre le fond du ciel et la terre, et donc un maintien de l'écran interne à une température suffisamment élevée pour obtenir, par convection, une température du gaz renfermé dans l'enveloppe apte à assurer la stabilisation du ballon.

De plus, un tel ballon possède une ouverture de grandes dimensions permettant d'écoper de grandes masses d'air lorsque le ballon, parvenu à son plafond, entame sa descente, et de stabiliser ledit ballon, compte tenu du volume important d'air renfermé, avec une différence de température très faible entre gaz interne et air extérieur (de l'ordre de 2 à 3 degrés). De ce fait, ce ballon est du type à volume constant et à masse variable et est, en outre, insensible aux fuites. En outre, du fait que le ballon se remplit progressivement d'air en perdant de l'altitude durant la nuit, celui-ci perd de l'altitude de manière asymptotique durant les premiers jours jusqu'à parvenir à une altitude d'équilibre.

Comme l'ont montré les simulations, un tel ballon peut avoir des durées de vol de l'ordre de deux à trois mois dans les régions polaires avec une altitude de croisière de 30 km, et sans nécessiter de largage de lest.

En outre, un tel ballon peut emporter des charges utiles importantes. A titre d'exemple, un ballon conforme à l'invention d'un volume de 400 000 m³ peut emporter une charge utile de 500 kg. Il est à noter de plus que le coût d'un tel ballon correspond à celui d'une montgolfière classique de 36 000 m³ pouvant emporter seulement une charge utile de 80 kg.

Il est à noter que les brevets US-4 865 266 et EP-524 872 décrivent des montgolfières dotées d'un élément interne capteur d'énergie solaire.

Toutefois, et en premier lieu, de telles montgolfières consistent en des engins d'un type totalement différent du ballon selon l'invention, qui tirent leur force ascensionnelle soit d'un brûleur (US-4 865 266), soit de la quantité de chaleur produite par la condensation de vapeur d'eau (EP-524 872).

De plus, les éléments internes équipant ces montgolfières diffèrent totalement de par leur structure ou leur positionnement de celui objet de l'invention : diaphragme formant un faux-plafond sous le pôle supérieur de la montgolfière pour le brevet US-4 865 266, voile de forme tronconique dont le bord supérieur est attaché dans la région équatoriale de l'enveloppe, pour le brevet EP-524 872.

En outre, ces montgolfières ne comportent aucun des autres éléments caractéristiques de l'invention qui, en combinaison avec la structure et le positionnement de l'écran interne, conduisent à l'obtention des résultats avantageux que procure le ballon stratosphérique objet de la présente demande.

De telles montgolfières constituent en fait des engins à fonctionnement strictement diurne de nature totalement différente de celui de l'invention, et sont le siège de mécanismes thermiques totalement différents.

Selon une autre caractéristique de l'invention, l'enveloppe extérieure souple est constituée de fuseaux assemblés longitudinalement au moyen de rubans de reprise d'effort fixés en bordure de ces fuseaux, lesdits fuseaux étant interrompus à distance du pôle inférieur de l'enveloppe de façon à former l'ouverture d'entrée d'air, et lesdits rubans s'étendant dans le prolongement dudit pôle inférieur et étant liés en partie basse à des moyens d'accrochage d'une charge.

Selon une autre caractéristique de l'invention, l'écran interne comporte une extrémité inférieure lestée apte à assurer le maintien en forme dudit écran.

De plus, les moyens d'attache sont préférentiellement disposés à une distance de l'axe longitudinal de l'enveloppe adaptée pour que lesdits moyens d'attache se trouvent en aval du largueur lors du lancement du ballon. Ainsi, cet écran et les moyens d'attache se trouvent dans la traîne lors du lancement et ne sont donc soumis à aucune sollicitation mécanique.

Selon une autre caractéristique de l'invention, les moyens d'attache sont constitués de rubans interposés entre les bordures de deux fuseaux lors de l'assemblage de ces derniers, de façon que lesdits rubans soient amenés à flotter à l'intérieur de l'enveloppe après déploiement desdits fuseaux, et de moyens d'accrochage de l'écran intérieur à chacun des rubans. Cette solution permet de réaliser l'intégralité de l'enveloppe selon une technologie classique dûment éprouvée, en intégrant simplement un ruban supplémentaire entre les fuseaux avant la soudure de la bordure de ces derniers.

Par ailleurs, l'écran interne est préférentiellement constitué d'une enveloppe cylindrique ouverte à chacune de ses extrémités. En effet, cette forme cylindrique conduit à un rendement d'absorption élevé, et à une homogénéité du chauffage, et ce quelle que soit la position du soleil.

En outre, lors du lancement du ballon, cette enveloppe cylindrique est avantageusement maintenue enserrée sur sa plus grande longueur, au moyen d'étrangleurs à ouverture télécommandée ou automatique. Cette disposition permet d'éviter, en effet, des vitesses ascensionnelles trop importantes et une surpression trop élevée à la plénitude du ballon en regard du débit de l'orifice de vidange.

D'autres caractéristiques, buts et avantages de l'invention ressortiront de la description détaillée qui suit en référence aux dessins annexés qui en représentent, à titre d'exemple non limitatif, un mode de réalisation préférentiel. Sur ces dessins qui font partie intégrante de la présente description :
- la figure 1 est une vue en perspective d'un ballon stratosphérique conforme à l'invention,
- la figure 2 est une vue représentant deux fuseaux lors de l'assemblage de ces derniers,
- la figure 3 est une vue de ces deux fuseaux après assemblage et déploiement de ces derniers,
- la figure 4 est un schéma représentant le ballon lors du lancement de ce dernier,
- la figure 5 est un schéma représentant ce ballon en phase ascensionnelle,
- la figure 6 est un graphique illustrant l'évolution dans le temps de ce ballon,
- la figure 7 est un graphique représentant l'évolution dans le temps de la vitesse ascendante et descendante de ce ballon,
- la figure 8 est un graphique représentant les fluctuations dans le temps de la masse de gaz renfermé dans ce ballon,
- la figure 9 est un graphique représentant les variations dans le temps de la température du gaz renfermé dans ce ballon (représentées en traits pointillés) et les variations de la température de l'air ambiant (en traits pleins),
- la figure 10 est un graphique représentant les variations dans le temps de la température de l'écran interne (en traits pointillés) et les variations de la température de l'air ambiant (en traits pleins),
- et la figure 11 est un graphique représentant les variations dans le temps de la température de l'enveloppe (en traits pointillés) et les variations de la température de l'air ambiant (en traits pleins).

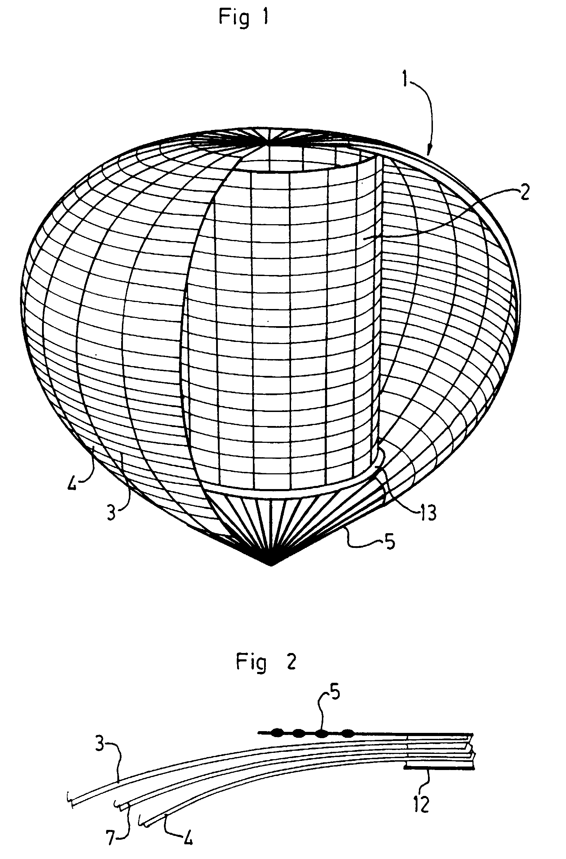

Le ballon stratosphérique représenté à la figure 1 est un ballon à corps chauffant constitué d'une enveloppe 1 de forme naturelle contenant une enveloppe cylindrique 2 faisant office de récupérateur d'énergie solaire et infrarouge.

En premier lieu, l'enveloppe 1 est réalisée au moyen de fuseaux tels que 3, 4 en un matériau transparent tel que du polyéthylène ou du polyester, possédant des coefficients d'absorption de l'ordre de 3 % dans le visible et de 20 % dans l'infrarouge, assemblés longitudinalement au moyen de rubans 5 de reprise d'efforts soudés en bordure desdits fuseaux.

De plus, ces fuseaux 3, 4 sont interrompus à distance de l'extrémité inférieure des rubans de reprise d'effort 5, de façon que l'enveloppe présente une ouverture d'entrée d'air de grandes dimensions. Les rubans de reprise d'effort sont, quant à eux, liés classiquement en partie basse, à des moyens d'accrochage de la charge 6 à emporter.

Cette enveloppe comprend, en outre, des rubans tels que 7 interposés entre les fuseaux 3, 4, et disposés à une distance de l'extrémité supérieure desdits fuseaux adaptée pour que les rubans 7 :
. soient répartis le long d'un cercle centré sur l'axe longitudinal de l'enveloppe 1 dans l'état de plénitude de cette dernière,
. soient situés en aval du largueur 8 lors du lancement du ballon.

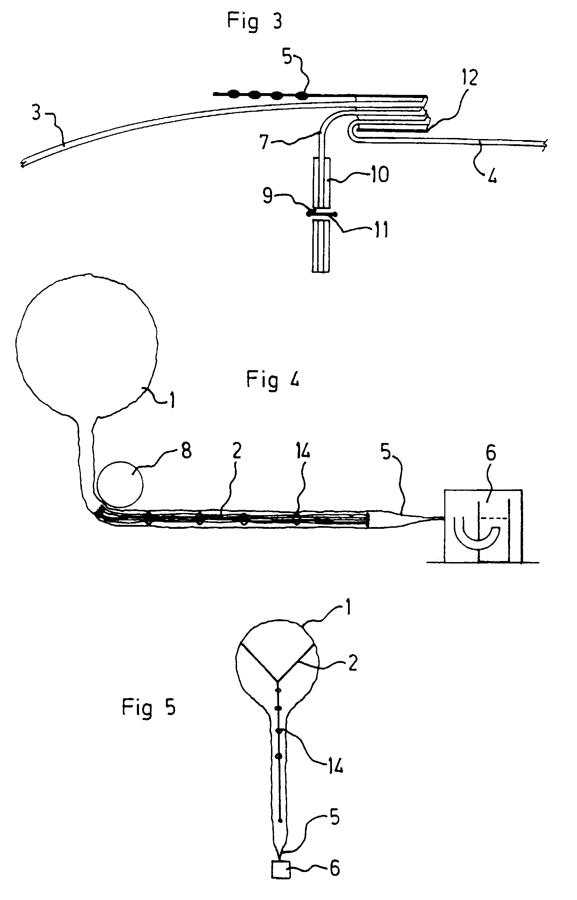

Tel que représenté à la figure 3, ces rubans 7 sont, en outre, dotés d'un oeillet 9 sur le pourtour duquel ils sont dotés de films de renfort 10, destiné à loger un lien 11 d'accrochage de l'enveloppe cylindrique 2.

L'assemblage des fuseaux 3, 4, des rubans de reprise d'effort 5, et des rubans d'accrochage 7 est réalisé selon une technique classique dite par superposition, représentée à la figure 2, consistant :
- à superposer les bords de deux fuseaux 3, 4,
- à interposer entre les fuseaux 3, 4, le ruban d'assemblage 7 réalisé par exemple en polyéthylène de 15 à 25 microns,
- à disposer sur un des fuseaux 3 le ruban de reprise d'efforts 5 constitué par exemple de d'eux films de Triplex (marque déposée) entre lesquels sont insérés des fils de polyester,
- à disposer sous l'autre fuseau 4 un autre ruban de Triplex 12,
- et à souder l'ensemble.

Un tel assemblage par superposition permet d'obtenir, tel que représenté à la figure 3, lorsque les fuseaux 3, 4 sont déployés, une enveloppe 1 à l'intérieur de laquelle flottent les rubans d'accrochage 7.

L'enveloppe cylindrique 2 est quant à elle ouverte à chacune de ses extrémités de façon à permettre la circulation du gaz aérostatique et à améliorer les échanges convectifs. Elle est réalisée en un matériau tel que du polyester noir, doré ou aluminisé, et est suspendue aux liens d'accrochage 11 de façon à s'étendre à l'intérieur de l'enveloppe 1 sans contact avec cette dernière.

De plus, elle est dotée, en partie basse d'un élément annulaire 13 de lestage apte à assurer son maintien en forme.

Tel que représenté à la figure 4, cette enveloppe cylindrique 2 est, dans un premier temps, maintenue enserrée au moyen d'étrangleurs classiques tels que 14, à ouverture télécommandée ou automatique.

De cette façon, et tel que représenté à la figure 5, elle n'est que peu déployée lors de la phase ascensionnelle, et n'influe que très peu sur la vitesse ascensionnelle du ballon.

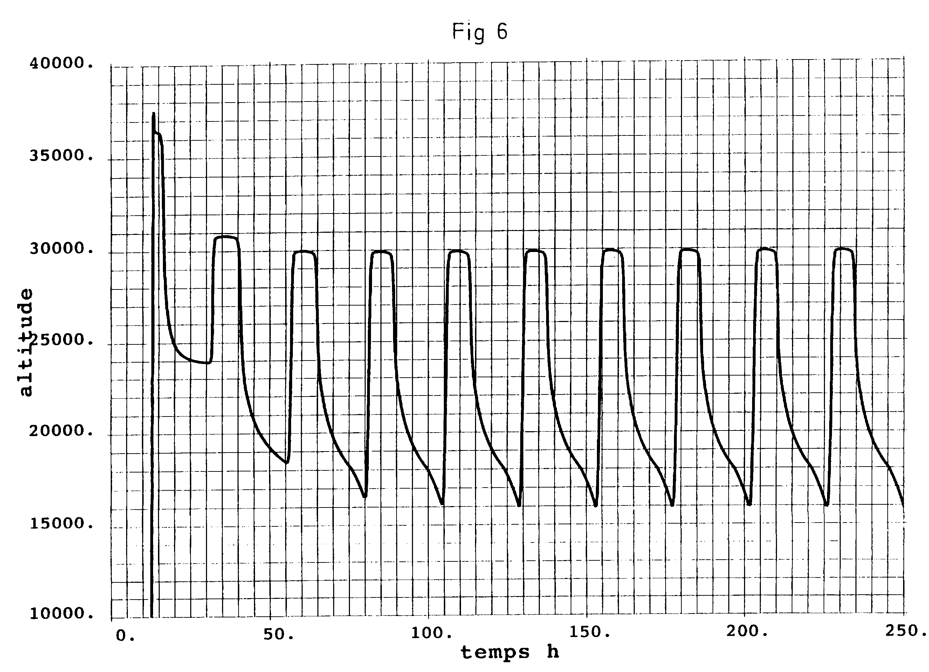

La figure 6 est un graphique représentant une simulation du comportement d'un ballon conforme à l'invention d'un volume de 400 000 m³, dont la somme des masses solides est de 1350 kg incorporant 500 kg de charge utile, lors d'une mission au mois de novembre, c'est-à-dire en hiver, au-dessus de l'arctique à une latitude 65° Nord. Ces graphiques ont été établis en prenant comme hypothèse un flux montant infrarouge diurne de 220 W/m² et nocturne de 170 W/m².

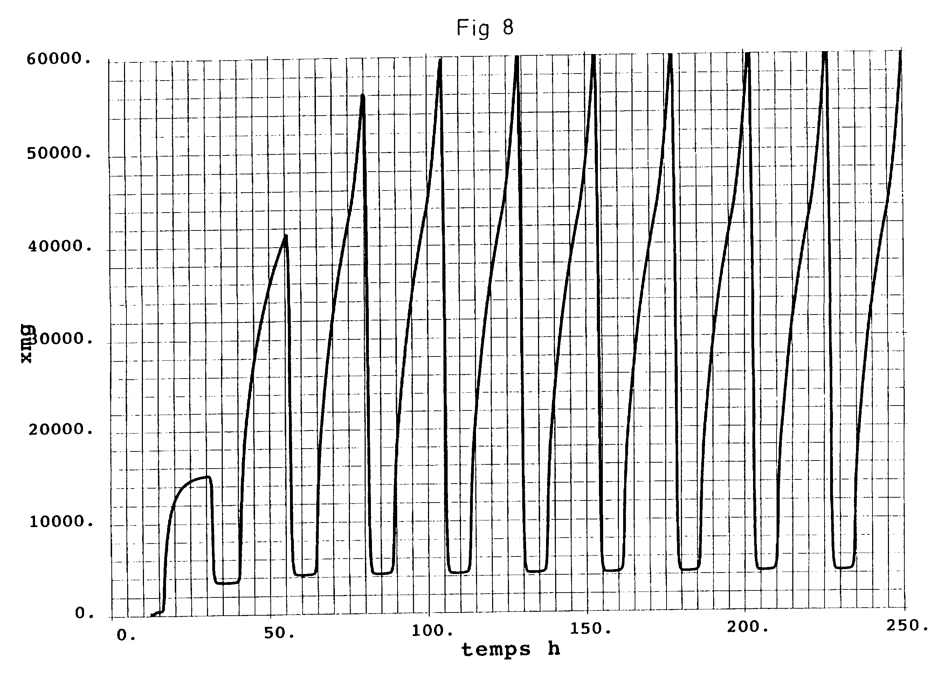

Comme on le constate sur ce graphique, ce ballon, du fait qu'il se remplit d'air en perdant de l'altitude la nuit, tel que représenté à la figure 8, remonte moins haut la nuit suivante. Ainsi, de jour en jour, ce ballon perd de l'altitude et se rapproche d'une manière asymptotique d'une altitude d'équilibre de l'ordre de 17 km obtenue lorsque l'air a totalement remplacé le gaz aérostatique.

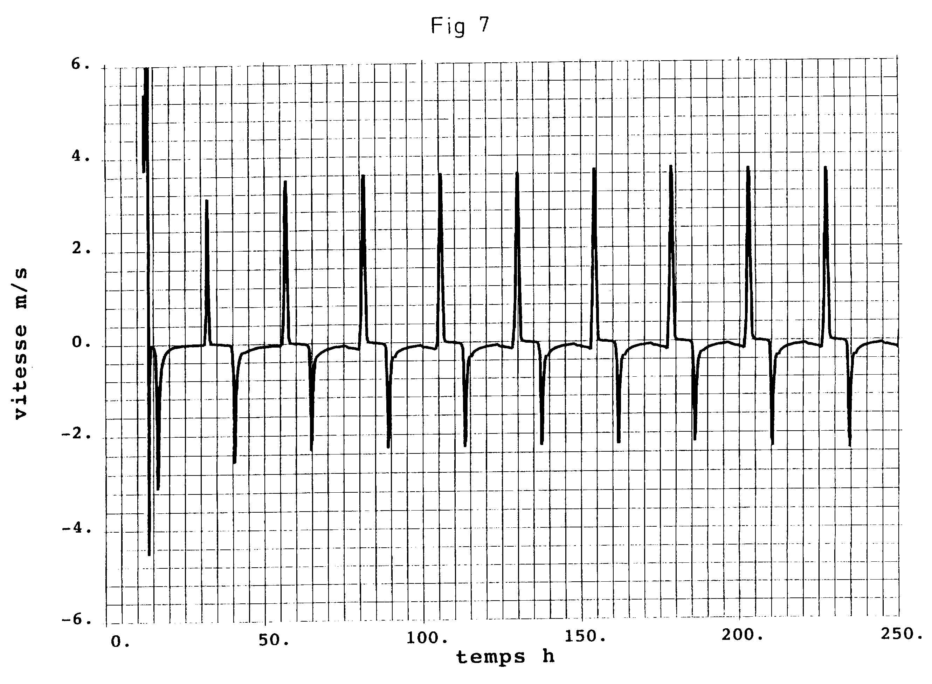

La figure 7 représente l'évolution des vitesses de déplacement vertical du ballon et illustre bien que, tant en période diurne que nocturne, ce ballon se stabilise à des paliers d'altitude après une période relativement courte d'ascension ou de descente.

Tel que cité ci-dessus, la figure 8 représente les variations de la masse de gaz interne renfermé dans l'enveloppe 1 et met en lumière l'importante quantité d'air écopée par le ballon lors de sa descente, qui autorise une stabilisation avec un Δ T (température gaz interne - température air ambiant) très faible.

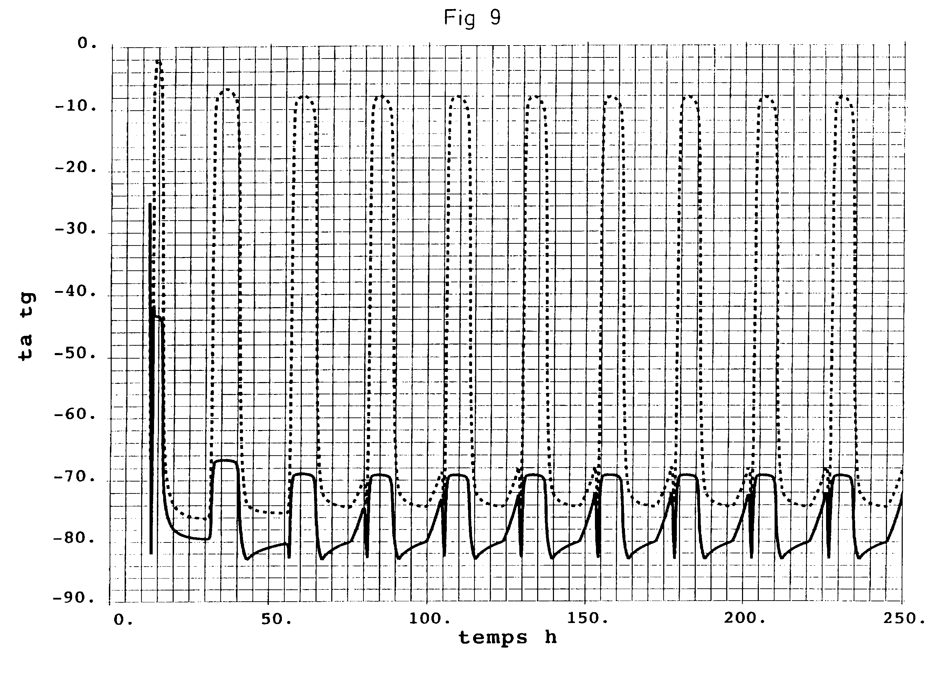

Ce Δ T est lui-même représenté à la figure 9 qui met en évidence que, grâce à la conception de ce ballon, la température du gaz interne, notamment en période nocturne, est largement suffisante, par rapport à la température de l'air ambiant, pour permettre de stabiliser le ballon.

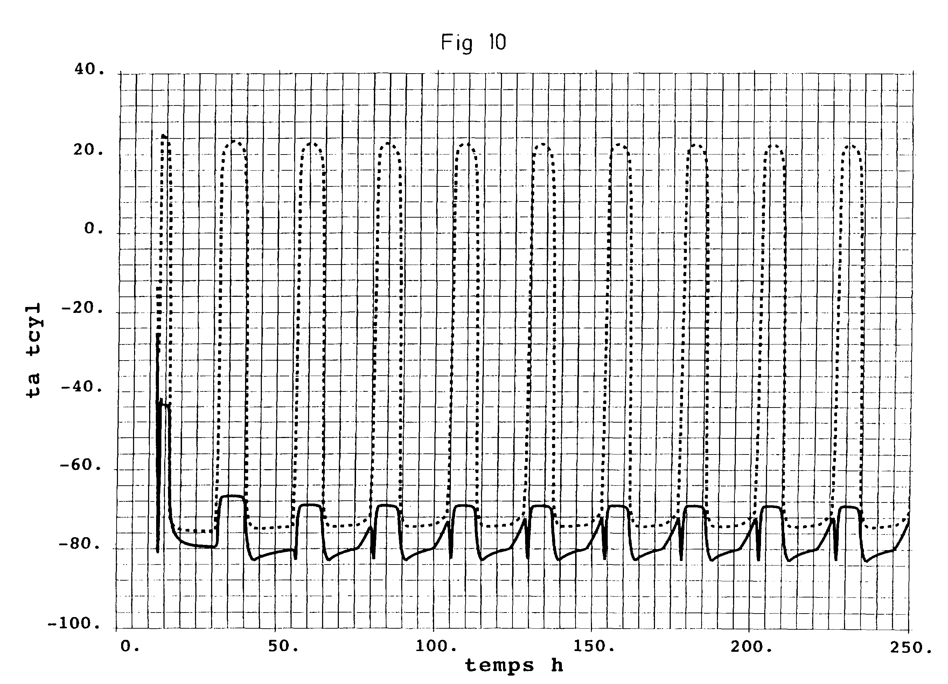

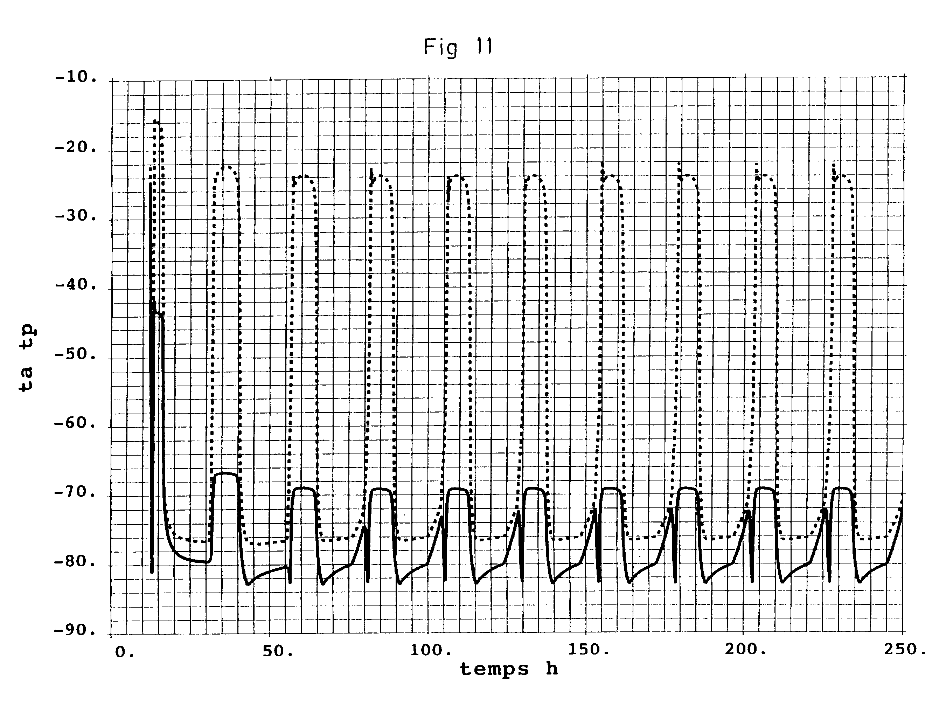

Les figures 10 et 11 représentent quant à elles l'évolution des températures de l'enveloppe 1 et de l'écran interne 2 qui, compte tenu du lieu de la mission et de la saison à laquelle cette dernière a été effectuée, sont très inférieures aux températures admissibles par les matériaux les composant, mais qui illustrent parfaitement les gradients de température entre lesdits enveloppe et écran interne et l'air ambiant.

Il est à noter que, bien qu'un tel ballon soit plus spécifiquement destiné à des missions dans la stratosphère, il est également bien adapté pour être utilisé dans la troposphère en tant qu'engin de loisir, en lieu et place des montgolfières classiques actuelles du type à brûleur.

Il a, en effet, été calculé qu'un ballon de ce type d'un volume de 3000 m³ pouvait supporter une charge utile de l'ordre de 500 kg.

Dans ce type d'application, toutefois, l'enveloppe 1 sera préférentiellement réalisée au moyen d'un matériau renforcé par des grilles de grandes dimensions pour des raisons de sécurité, le rôle de ces grilles étant de stopper d'éventuelles déchirures de sorte que de telles déchirures ne puissent perturber le fonctionnement de l'engin.

En outre, dans le cadre de cette application, le ballon doit être équipé de tout moyen connu en soi permettant de faire varier la surface active de l'écran interne 2 et d'assurer le pilotage de l'engin.

## Revendications

1. Ballon stratosphérique caractérisé en ce qu'il comprend :
- une enveloppe extérieure souple (1) de forme naturelle, c'est-à-dire à isocontrainte, réalisée en matière synthétique transparente et présentant une ouverture inférieure d'entrée d'air apte à permettre de maintenir le ballon à volume constant,
- un écran interne (2) réalisé en un matériau captateur d'énergie visible et infrarouge, et présentant la forme d'une surface engendrée par une génératrice mobile parallèle à l'axe de symétrie longitudinal de l'enveloppe extérieure (1), ledit écran interne étant relié à l'enveloppe (1) par des moyens d'attache (7, 11) disposés en partie haute de ladite enveloppe à distance de l'axe longitudinal de cette dernière, de façon à s'étendre longitudinalement librement à l'intérieur de l'enveloppe (1) sans contact avec celle-ci.

2. Ballon stratosphérique selon la revendication 1, caractérisé en ce que l'enveloppe extérieure souple (1) est constituée de fuseaux (3, 4) assemblés longitudinalement au moyen de rubans de reprise d'effort (5) fixés en bordure de ces fuseaux, lesdits fuseaux étant interrompus à distance du pôle inférieur de l'enveloppe (1) de façon à former l'ouverture d'entrée d'air, et lesdits rubans s'étendant dans le prolongement dudit pôle inférieur et étant liés en partie basse à des moyens d'accrochage d'une charge (6).

3. Ballon stratosphérique selon l'une des revendications 1 ou 2, caractérisé en ce que l'écran interne (2) comporte une extrémité inférieure lestée apte à assurer le maintien en forme dudit écran.

4. Ballon stratosphérique selon l'une des revendications 1 à 3, caractérisé en ce que les moyens d'attache (7, 11) sont disposés à une distance de l'axe longitudinal de l'enveloppe (1) adaptée pour que lesdits moyens d'attache se trouvent en aval du largueur (8) lors du lancement du ballon.

5. Ballon stratosphérique selon la revendication 2, dans lequel les fuseaux (3, 4) sont assemblés par superposition de la bordure de deux fuseaux et du ruban de reprise d'effort (5), ledit ballon étant caractérisé en ce que les moyens d'attache sont constitués de rubans (7) interposés entre les bordures de deux fuseaux (3, 4) lors de l'assemblage de ces derniers, de façon que lesdits rubans soient amenés à flotter à l'intérieur de l'enveloppe (1) après déploiement desdits fuseaux, et de moyens (11) d'accrochage de l'écran interne (2) à chacun des rubans (7).

6. Ballon stratosphérique selon l'une des revendications précédentes, caractérisé en ce que l'écran interne est constitué d'une enveloppe cylindrique (2) ouverte à ses deux extrémités.

7. Ballon stratosphérique selon la revendication 6, caractérisé en ce que, en vue du lancement du ballon, l'enveloppe cylindrique (2) est maintenue enserrée, sur sa plus grande longueur, au moyen d'étrangleurs (14) à ouverture télécommandée ou automatique.

## Patentansprüche

1. Stratosphärenballon, dadurch gekennzeichnet, daß er folgendes umfaßt:
- eine flexible Außenhülle (1) mit einer natürlichen Form, d.h. mit gleicher Beanspruchung, aus einem transparenten synthetischen Material und mit einer unteren Lufteinlaßöffnung, die in der Lage ist, den Ballon auf einem konstanten Volumen zu halten;
- einen Innenschirm (2) aus einem Material zur Aufnahme von sichtbarer und IR-Energie und mit einer Oberflächenform, die durch eine mobile Erzeugende parallel zur Symmetrielängsachse der Außenhülle (1) erzeugt wird, wobei der genannte Innenschirm durch Befestigungsmittel (7, 11) mit der Hülle (1) verbunden ist, die im oberen Teil der genannten Hülle in einem Abstand von der Längsachse derselben so angeordnet sind, daß sie in Längsrichtung frei innerhalb der Hülle (1) verlaufen, ohne mit ihr in Berührung zu kommen.

2. Stratosphärenballon nach Anspruch 1, dadurch gekennzeichnet, daß die flexible Außenhülle (1) aus Bahnen (3, 4) besteht, die in Längsrichtung mit Spannbändern (5) zusammengesetzt sind, die an den Rändern dieser Bahnen befestigt sind, wobei die genannten Bahnen in einem Abstand vom unteren Pol der Hülle (1) unterbrochen werden, um den Lufteinlaß zu bilden, und wobei die genannten Bänder in die Verlängerung des genannten unteren Pols verlaufen und am unteren Teil mit einem Mittel zum Anhängen einer Last (6) verbunden sind.

3. Stratosphärenballon nach einem der Ansprüche 1 oder 2, dadurch gekennzeichnet, daß der Innenschirm (2) ein mit Ballast versehenes unteres Ende aufweist, das gewährleisten kann, daß die Form des genannten Schirms erhalten bleibt.

4. Stratosphärenballon nach einem der Ansprüche 1 bis 3, dadurch gekennzeichnet, daß die Befestigungsmittel (7, 11) in einem Abstand von einer Längsachse der Hülle (1) so angeordnet sind, daß sich die genannten Befestigungsmittel unterhalb der Ballastabwurfstelle (8) beim Starten des Ballons befinden.

5. Stratospharenballon nach Anspruch 2, bei dem die Bahnen (3, 4) durch Übereinanderlegen der Ränder von zwei Bahnen und des Spannbandes (5) zusammengesetzt werden, dadurch gekennzeichnet, daß die Befestigungsmittel des genannten Ballons aus Bändern (7), die sich zwischen den Rändern der beiden Bahnen (3, 4) befinden, wenn dieselben zusammengesetzt werden, so daß die genannten Bänder veranlaßt werden, innerhalb der Hülle (1) zu schweben, nachdem die genannten Bahnen eingesetzt werden, und aus einem Mittel (11) zum Befestigen des Innenschirms (2) an jedem der Bänder (7) bestehen.

6. Stratosphärenballon nach einem der vorherigen Ansprüche, dadurch gekennzeichnet, daß der Innenschirm aus einer zylindrischen Hülle (2) besteht, die an ihren beiden Enden offen ist.

7. Stratosphärenballon nach Anspruch 6, dadurch gekennzeichnet, daß zum Starten des genannten Ballons die zylindrischen Hülle (2) mit Hilfe von Drosselventilen (14), die fern- oder automatisch gesteuert werden, über ihre größte Länge gespannt gehalten wird.

## Claims

1. Stratospheric balloon characterised in that it comprises :
- an outer flexible envelope (1) having a natural shape, namely with iso-stress, made of transparent synthetic material and having a lower air inlet opening capable of enabling the balloon to be maintained at constant volume,
- an internal screen (2) made of visible and infrared energy collecting material, and having the shape of a surface produced by a mobile generatrix parallel to the longitudinal axis of symmetry of the external envelope (1), said internal screen being connected to the envelope (1) by means of attachment (7, 11) disposed at the upper part of said envelope at a distance from the longitudinal axis of the latter, so as to extend longitudinally freely inside the envelope (1) without contacting it.

2. Stratospheric balloon according to claim 1, characterised in that the outer flexible envelope (1) consists of gores (3, 4) assembled longitudinally by means of tensioning tapes (5) attached to the edges of these gores, said gores being interrupted at a distance from the lower pole of the envelope (1) so as to form the air inlet, and said tapes extending into the extension of said lower pole and being connected at the lower part to means for attaching a load (6).

3. Stratospheric balloon according to either of claims 1 or 2, characterised in that the internal screen (2) includes a ballasted lower end able to ensure that the shape of said screen is maintained.

4. Stratospheric balloon according to one of claims 1 to 3, characterised in that the means of attachment (7, 11) are disposed at a distance from the longitudinal axis of the envelope (1) adapted so that said means of attachment are situated downwind from the cast-off point (8) when the balloon is launched.

5. Stratospheric balloon according to claim 2, characterised in that the gores (3, 4) are assembled by overlapping the edges of two gores and the tensioning tape (5), characterised in that the means of attachment of said balloon consist of tapes (7) interposed between the edges of the two gores (3, 4) when the latter are assembled, so that said tapes are caused to float inside the envelope (1) after said gores are deployed, and means (11) for attaching the internal screen (2) to each of the tapes (7).

6. Stratospheric balloon according to one of the preceding claims, characterised in that the internal screen consists of a cylindrical envelope (2) open at its two ends.

7. Stratospheric balloon according to claim 6, characterised in that, with a view to launching the said balloon, the cylindrical envelope (2) is held stretched, over its greatest length, by means of throttle valves (14) opened by remote control or automatically.
